Europäisches Patentamt

European Patent Office

Office européen des brevets

(11) Publication number: **0 335 031**
**A2**

# EUROPEAN PATENT APPLICATION

(21) Application number: **88308033.5**

(22) Date of filing: **31.08.88**

(51) Int. Cl.⁴: **G11B 21/02 , G11B 21/22 , G11B 21/00**

(30) Priority: **30.03.88 US 175448**

(43) Date of publication of application:
**04.10.89 Bulletin 89/40**

(84) Designated Contracting States:
**DE FR GB**

(71) Applicant: **MAGNETIC PERIPHERALS INC.**
**8100-34th Avenue South**
**Minneapolis Minnesota 55440(US)**

(72) Inventor: **Quatro, Robert Allen**
**4412 N.W. 60 Place**
**Oklahoma City Oklahoma 73112(US)**
Inventor: **Wilcox, Lawrence Allen**
**722 North Canadian Terrace**
**Mustang Oklahoma 73064(US)**

(74) Representative: **Caro, William Egerton et al**
**J. MILLER & CO. Lincoln House 296-302 High**
**Holborn**
**London WC1V 7JH(GB)**

(54) **Lock mechanism for a head-arm mechanism of a disk drive.**

(57) A lock mechanism for a head-arm mechanism (24) of a disk drive having a frame (12,14) is supported by a frame and is movable between a lock position wherein the head-arm mechanism is restrained from movement and an unlock position. The lock mechanism comprises a bi-stable solenoid (10) mounted to the frame (12,14). The solenoid has an armature (56) having first and second positions and coils (44 - 49) electrically energisable to move the armature between its first and second positions. A pawl (18) is mounted to the armature (56) and has a detent (86). The pawl is movable between first and second rest positions as the armature is moved between its first and second positions. A spacer (39) is mounted to the head-arm mechanism, the detent (86) on the pawl (18) being engaged by the spacer (39) when the head-arm mechanism is in its lock position and the pawl (18) is in its first rest position to restrain the head-arm mechanism to its lock position. A stop (80) is mounted to the frame for engaging the pawl (18) when the pawl is in its second rest position.

Fig.-1

# LOCK MECHANISM FOR A HEAD-ARM MECHANISM OF A DISK DRIVE

This invention relates to lock mechanisms for head-arm mechanisms of disk drives.

In disk drives of the type wherein a head "lands" on the surface of a disk, it is important to employ a lock mechanism to lock the head in a retracted position to prevent damage to the disk drive during transportation and other times of non-use. Heretofore, lock mechanisms for disk drives have operated by one of two principles. One type of lock mechanism employs a fully mechanical device, usually operated manually by a lever or the like, which engages the arm to lock it in a retracted position. A second type employs a solenoid which is energised in one or the other position to lock or unlock the head-arm mechanism. One difficulty with the solely mechanical lock mechanism is that the moving parts often scrape against each other, dis-lodging particles from the parts which particles contaminate the disk drive and the disk. The particles interfere with the operation of the disk drive and the flying characteristics of the head. The lock mechanism employing a solenoid requires energisation to maintain the head-arm mechanism in either a locked or unlocked position. The constant energisation of the solenoid generates heat within the disk drive, causing yet other problems. There is, in fact, a third type of lock mechanism employing a mechanical lock operated by a solenoid. In reality, these "hybrid" lock mechanisms exhibit the adverse characteristics of both the mechanical and solenoid lock mechanisms by requiring constant energisation in one or the other positions and by mechanical scraping of the parts.

The present invention seeks to provide a locking mechanism for a head-arm mechanism employing a solenoid which is energised solely to move the lock mechanism from a locked to an unlocked position, and vice versa. At other times, the solenoid is not energised. The locking mechanism thus does not require mechanical leverage as in prior mechanical lock mechanisms, nor does it require electrical energisation of a solenoid to maintain a lock or unlock position. The present invention also seeks to provide a locking mechanism which dissipates as little heat as possible and does not contaminate the disk drive.

According to the present invention, there is provided a lock mechanism for a head-arm mechanism of a disk drive having a frame, said head-arm mechanism being supported by said frame and being movable between a lock position wherein said head-arm mechanism is restrained from movement and an unlock position, said lock mechanism being characterised by comprising: bi-stable solenoid means mounted to said frame, said solenoid means having armature means having first and second positions, and winding means electrically energisable to move said armature means between its first and second positions; pawl means mounted to said armature means, said pawl means having a detent and being movable between first and second rest positions as said armature means is moved between its first and second positions, respectively; spacer means mounted to said head-arm mechanism, said detent of said pawl means engaging said spacer means when said head-arm mechanism is in its lock position and said pawl means is in its first rest position to restrain said head-arm mechanism to its lock position; and stop means mounted to said frame for engaging said pawl means when said pawl means is in its second rest position.

Said bi-stable solenoid means may include a magnetic circuit including permanent magnet means arranged to bias said armature means to its first position when said pawl means is in its first rest position and biasing said armature means to its second position when said pawl means is in its second rest position.

Said bi-stable solenoid means preferably is a rotary solenoid and said armature means comprises a rotor, said rotor being arranged to rotate between first and second rotational positions spaced apart by a predetermined angle, said stop means and said spacer means restraining rotational movement of the rotor through an angle smaller than said predetermined angle.

Said rotor may be segmented into permanent magnet poles 60$^\circ$ apart and said stop means and said spacer means, in operation, restrain said pawl means from movement through an angle of less than 60$^\circ$.

Said pawl means preferably is restrained from movement to an angle less than about 40$^\circ$.

The invention is illustrated, merely by way of example, in the accompanying drawings, in which:-

Figure 1 is a perspective view of a lock mechanism according to the present invention for a head-arm mechanism of a disk drive;

Figure 2 is a top view of the lock mechanism illustrated in Figure 1;

Figure 3 is a front view of part of the lock mechanism illustrated in Figure 1, taken on line 3 - 3 in Figure 2;

Figures 4A to 4C are views of part of the lock mechanism of Figure 1 useful in explaining its operation;

Figures 5 to 7 are views of a bi-stable solenoid of the lock mechanism illustrated in Figures 1 to 4, Figure 7 being taken on line 7 - 7 of Figure 5; and

Figure 8 is a diagram of the wiring of windings of the bi-stable solenoid of Figures 5 to 7.

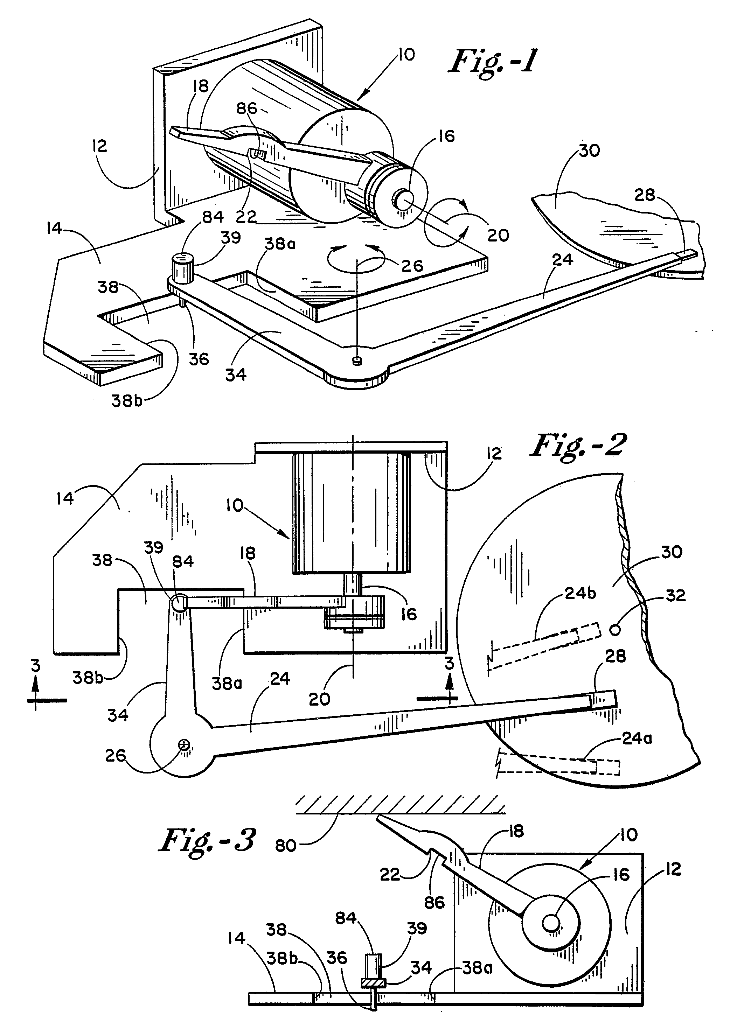

Referring to the drawings, and particularly to Figures 1 to 4, there is illustrated a lock mechanism according to the present invention for a head-arm mechanism of a disk drive. The lock mechanism includes a bi-stable rotary solenoid 10 mounted on an upwardly extending arm 12 of a bracket 14. The bracket 14 is part of a housing (not shown) to which the magnetic disk 30 and a head-arm mechanism 24 are mounted. A shaft 16 of the solenoid 10 has a pawl 18 mounted thereto for rotary motion about an axis 20 of the solenoid 10. The underside of the pawl 18 includes a detent 86 having an engaging surface 22.

The head-arm mechanism 24 is journalled to the housing for rotation about an axis 26 and carries a head 28 for sweeping across the surface of a magnetic disk 30 (Figure 2), which in turn is journalled to the housing to rotate about an axis 32. As shown particularly in Figure 2, the head-arm mechanism 24 may be moved between radial postions illustrated at 24a and 24b.

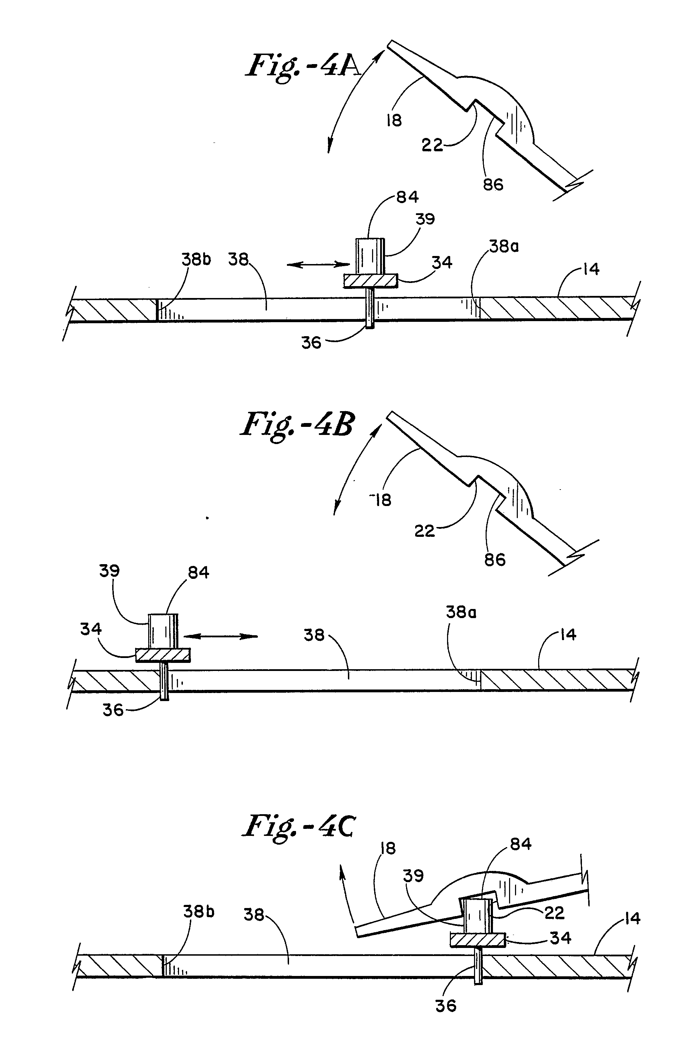

A stop arm 34 is fixedly mounted to the head-arm mechanism 24 to rotate about the axis 26 with the head-arm mechanism 24. The arm 34 carries a pin 36 (Figure 3) extending into a notch region 38 of the bracket 14. As shown particularly in Figures 4A to 4C, the pin 36 is arranged to engage edges 38a and 38b of the notch region 38 and to limit the rotation of the arm 34 and the headarm mechanism 24 about the axis 26 (Figure 2). Thus the edges 38a, 38b form limiting stops to the rotational travel of the arm 34 and the head-arm mechanism 24 thereby limiting the movement of the head-arm mechanism 24 to between the radial positions 24a, 24b. A spacer 39 is mounted to the arm 34 so that the detent 86 may engage the spacer 39 when the pin 36 is in a stop position against the edge 38a and the pawl 18 is moved by the solenoid 10 to the position shown in Figure 4C. The surface 84 of the spacer 39 is arranged to engage the edge of the detent 86 on the pawl, thereby limiting rotational movement of the pawl to a first rest position. Rotational movement of the pawl 18 is limited to a second rest position by a stop 80 (Figure 3) on the housing. Preferably, the pawl 18 is limited by the stop 80 and the spacer 39 to a rotational movement of between 30° and 40°, as hereinafter explained.

In the operation of the lock mechanism, when it is desired to lock the head-arm mechanism into its first rest position, the head-arm mechanism 24 is moved to the radial position 24a so that the pin 36 bears against the edge 38a. The solenoid 10 is energised to move the pawl 18 to the first rest position illustrated in Figure 4C so that the surface 84 engages the detent 86 to limit travel of the pawl and the surface 22 of the detent engages the stop 39 to hold the pin 36 against the edge 38a in the position illustrated in Figure 4C. Hence, the arm 34 (and the head-arm mechanism 24) are rest-rained and locked in a first rest position. When it is desired to release the head-arm mechanism, the solenoid 10 is again energised to move the pawl 18 to the second rest position illustrated in Figure 4A, thereby permitting the arm 34 to rotate about the axis 26 as the pin 36 moves in the notch portion 38 of the bracket 14. Thus, the head-arm mechanism 24 can rotate about the axis 26 as illustrated in Figure 2.

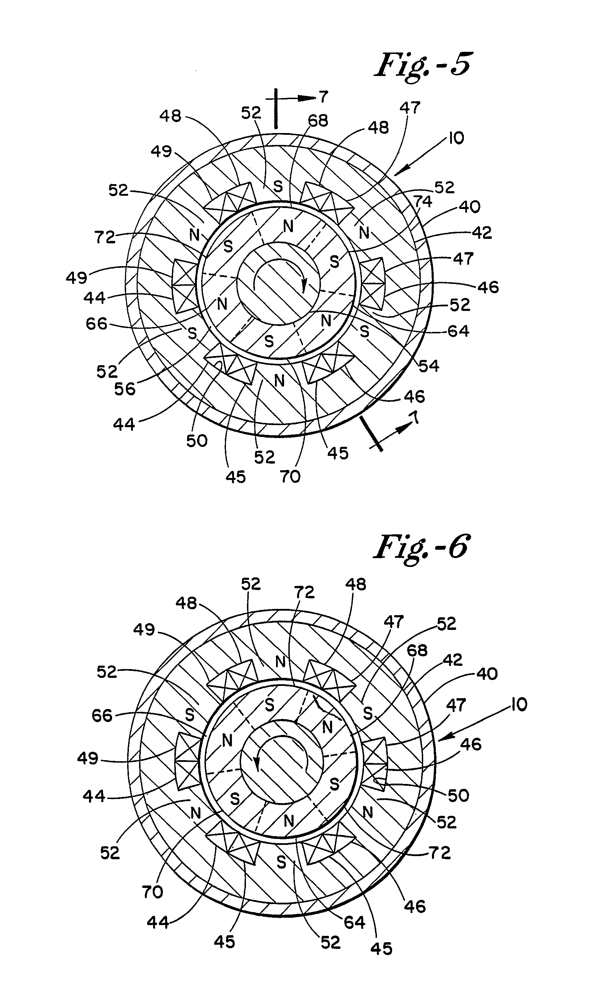

Referring to Figures 5 to 7, the solenoid 10 is shown in greater detail. The solenoid 10 comprises a housing 40 supporting a ferrous metal stator 42 therein. Coils 44 - 49 are wound in slots 50 of the stator 42. Each coil 44 - 49 is wound between successive slots 50, spaced 60° apart, and surrounds one of six ferrous lands 52. Each slot 50 contains one half of each of two of the six coils. As shown in Figure 8, the coils 44, 46, 48 are wound opposite to the coils 43, 45, 49 so that successive lands 52 are oppositely polarised. Thus, depending upon the direction of current in the coils 44 - 49, alternate lands 52 will be energised at either a north magnetic pole as indicated in Figure 5, or at a south magnetic pole as indicated in Figure 6.

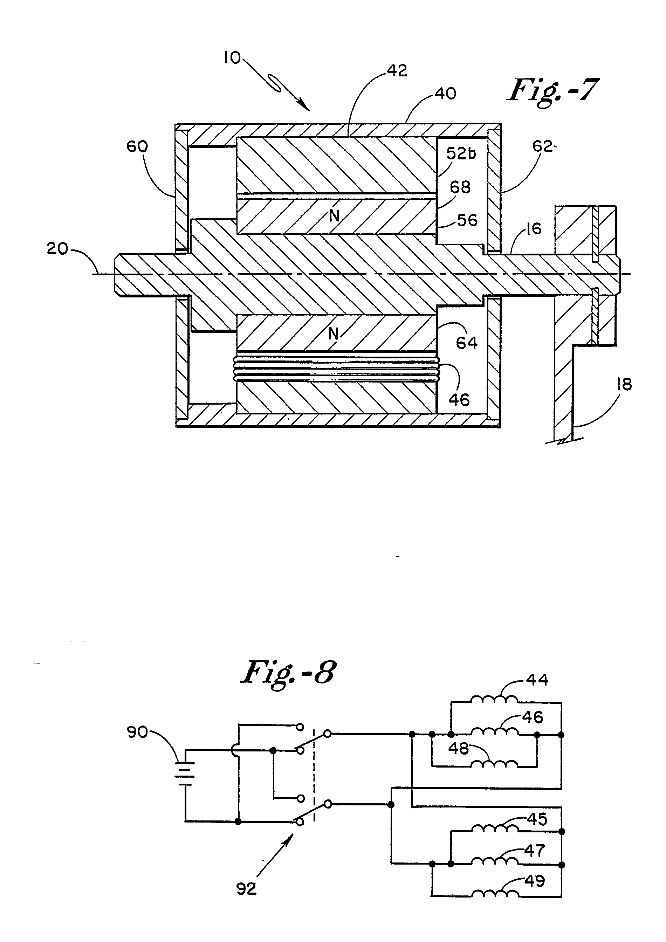

The rotor of the solenoid 10 includes a shaft 54 to which the pawl 18 is affixed. A magnetic armature member 56 is fixed to the shaft 54. The shaft 54 is journalled to ends 60, 62 (Figure 7) of the housing 40 to rotate about the axis 20. The armature member 56 is divided into six equal permanent magnet portions 64, 66, 68, 70, 72, 74, each encompassing 60° in circumference about the shaft 54. Magnetic portions 64, 66, 68 are permanent north magnetic poles, whereas alternate magnet portions 70, 72, 74 are permanent south magnetic poles.

In operation of the solenoid 10, upon energisation of the coils 44 - 49 with a DC current, such as a source 90 and a switch 92 (Figure 8) in a manner to produce magnetic fields of the same polarity as on the opposing portion of the rotor, the armature member 56 will attempt to rotate from one angular position to another, such as from the position illustrated in Figure 5 to the position illustrated in Figure 6. It is preferred to limit rotation of the rotor to between about 30° and 40° so that the limit positions of the rotor position the centre of the magnetic portions between 10° and 15° of the centre of the lands. Hence the stop 80 limits rotational movement of the pawl 18 to one angular position and the surface 86 of the pawl 18 engages the spacer 39 to limit movement of the pawl to the second angular position. Upon de-energisation of the coils 44 - 49, such as by moving the switch 92 to the centre position, each permanent magnetic pole on the rotor will continue to attract to the nearest land 52, maintaining the rotor in its stable position. Hence, the magnetic circuit formed by the permanent magnetic pole of the armature member 56 and the lands 52 bias the rotor to one or the other rest position defined by the limits of the stop 80 and spacer 39. Upon energisation of the coils 44 - 49 with a DC current in an opposite direction, such as by operating the switch 92 to its position opposite that shown in Figure 8, the solenoid will rotate to its original position, as from Figure 6 to Figure 5.

The lock mechanism described above is effective to lock the head-arm mechanism without employing mechanical leverage devices which create friction and contaminate the disk drive, or using a solenoid which is continuously energised to hold the lock mechanism in one position or the other. Thus, the lock mechanism does not appreciably dissipate heat into the disk drive due to continuous energisation, nor contaminate the disk drive due to physical scraping of parts. The lock mechanism is thus effective in operation and inexpensive to produce.


Claims

1. A lock mechanism for a head-arm mechanism (24) of a disk drive having a frame (12,14), said head-arm mechanism being supported by said frame and being movable between a lock position wherein said head-arm mechanism is restrained from movement and an unlock position, said lock mechanism being characterised by comprising: bi-stable solenoid means (10) mounted to said frame (12,14), said solenoid means having armature means (56) having first and second positions, and winding means (44 - 49) electrically energisable to move said armature means between its first and second positions; pawl means (18) mounted to said armature means (56), said pawl means having a detent (86) and being movable between first and second rest positions as said armature means is moved between its first and second positions, respectively; spacer means (39) mounted to said head-arm mechanism, said detent (86) of said pawl means (18) engaging said spacer means (39) when said head-arm mechanism is in its lock position and said pawl means (18) is in its first rest position to restrain said head-arm mechanism to its lock position; and stop means (80) mounted to said frame for engaging said pawl means (18) when said pawl means is in its second rest position.

2. A lock mechanism as claimed in claim 1 characterised in that said bi-stable solenoid means (10) includes a magnetic circuit including permanent magnet means (64 - 74) arranged to bias said armature means (56) to its first position when said pawl means (18) is in its first rest position and biasing said armature means (56) to its second position when said pawl means (18) is in its second rest position.

3. A lock mechanism as claimed in claim 1 or 2 characterised in that said bi-stable solenoid means (10) is a rotary solenoid and said armature means (56) comprises a rotor, said rotor being arranged to rotate between first and second rotational positions spaced apart by a predetermined angle, said stop means (80) and said spacer means (39) restraining rotational movement of the rotor through an angle smaller than said predetermined angle.

4. A lock mechanism as claimed in claim 3 characterised in that said rotor is segmented into permanent magnet poles $60^\circ$ apart and said stop means (80) and said spacer means (39), in operation, restrain said pawl means (18) from movement through an angle of less than $60^\circ$.

5. A lock mechanism as claimed in any preceding claim characterised in that said pawl means (18) is restrained from movement to an angle less than about $40^\circ$.

*Fig.-1*

*Fig.-2*

*Fig.-3*

*Fig.-4A*

*Fig.-4B*

*Fig.-4C*

EP 0 335 031 A2

*Fig.-5*

*Fig.-6*

*Fig.-7*

*Fig.-8*